# EUROPEAN PATENT APPLICATION

(11) **EP 3 007 305 A1**
(43) Date of publication of application: **13.04.2016**
(21) Application number: 13885644.8
(22) Date of filing: 28.05.2013
(51) Int. Cl.: H02J 7/00

(54) **APPARATUS AND METHOD FOR EFFICIENT CHARGING OF ELECTRONIC CIGARETTES**

(71) Applicant: KIMREE HI-TECH INC., Road Town, Tortola (VG)
(72) Inventor: XIANG, Zhiyong, Shenzhen Guangdong 518057 (CN)
(74) Representative: Bosch, Matthias
(86) International application number: PCT/CN2013/076358
(87) International publication number: WO 2014/190500

(57) **Abstract**

An apparatus and method for efficient charging of electronic cigarettes; the apparatus comprises an electronic cigarette carton (100) and a battery rod (200), the battery rod (200) comprising a charging management unit (210) and an electronic cigarette battery unit (220), the electronic cigarette carton (100) comprising an electronic cigarette carton battery unit (110), a current sampling unit (130), a micro control unit (140), and an adjustable voltage output unit (120); the current sampling unit (130) detects the actual value of the charging current from the charging management unit (210) to the electronic cigarette battery; a micro controller (Ul) compares the actual value of the charging current with an in-built battery constant charging current, and then controls the adjustable voltage output unit (120) in adjusting the charging voltage output. The adjustment of the charging voltage by controlling the adjustable voltage output unit (120) allows the actual charging current to be equal to or slightly less than the battery constant charging current; reducing the charging voltage differential between the charging voltage and the electronic cigarette battery unit (220) voltage improves charging efficiency.

## Description

### TECHNICAL FIELD

The present invention relates to rechargeable electrical cigarettes, and more particularly, relates to an apparatus and method for efficient charging of electronic cigarettes.

### BACKGROUND

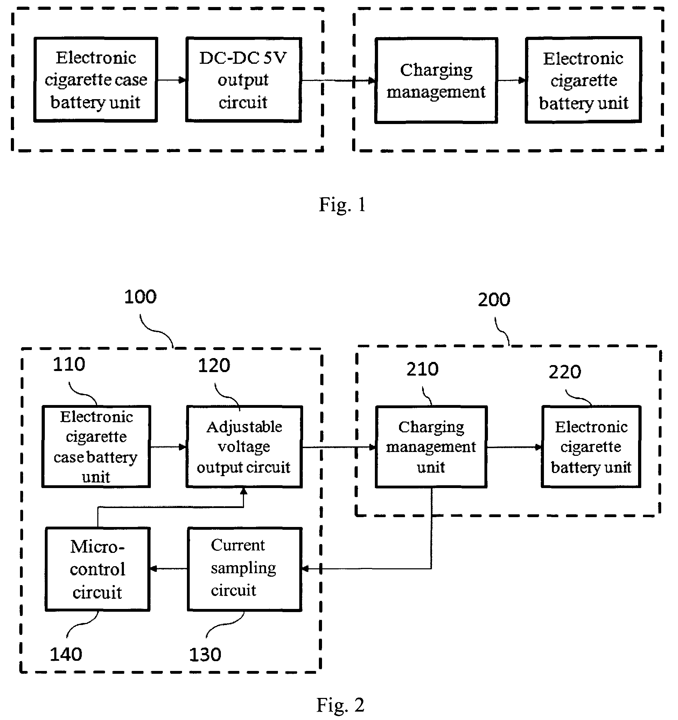

At present, most of rechargeable electronic cigarettes available in the market are integrated with charging managements therein. The charging modes of these electronic cigarettes with charging managements are all in way of linear constant current. As shown in Fig. 1, most of electronic cigarette cases available in the market work in a mode of outputting a constant voltage when charging, for example, the constant voltage outputted is 5V. When such an electronic cigarette case charges rechargeable battery rods with a charging mode of linear constant current, the charging efficiency is very low, and the cigarette case can only charge a few rechargeable battery rods. Power loss generated in the process of charging the battery rods by the battery of the cigarette case is great, and the charging efficiency is only about 50%∼65%. The charging efficiency is calculated as follows: (efficiency of DC-DC) * (efficiency of linear charging). For example, when the efficiency of DC- DC (i.e., the efficiency of boosting the battery voltage to 5V) is 85%, and the efficiency of linear charging is 3.7/5=74%, thus the total efficiency is 85%*74%=59%.

In order to ensure a high charging efficiency, constant charging current should be firstly ensured. The charging current is relevant to a voltage difference between the battery voltage and the charging voltage, wherein, the smaller the voltage difference is, the higher the efficiency is achieved. However, in the prior art, electronic cigarette cases charge battery rods of electronic cigarettes by means of constant voltage, and the charging efficiency is very low.

Therefore, there are drawbacks in the prior art, and they need to be overcome.

### BRIEF SUMMARY

To overcome the drawbacks that the constant voltage charging efficiency is low, the objective of the present invention is to provide an apparatus and method for efficient charging of electronic cigarettes.

The technical solutions of the present invention for solving the technical problems are as follows:
An apparatus for efficient charging of electronic cigarettes is provided, which comprises an electronic cigarette case and a battery rod; the battery rod includes a charging management unit and an electronic cigarette battery unit, and the electronic cigarette case includes an electronic cigarette case battery unit; the electronic cigarette case further includes a current sampling unit, a micro-control unit, and an adjustable voltage output unit;
the adjustable voltage output unit is connected to the electronic cigarette case battery unit, the micro-control unit, and the charging management unit respectively, and the current sampling unit is connected to the charging management unit and the micro-control unit respectively;
the current sampling unit is configured to sample actual charging current of the charging management unit; and the micro-control unit is configured to determine whether a difference between preset constant charging current and the actual charging current is within a preset range, and is further configured to control transmission of a voltage regulation control signal and thereby control the adjustable voltage output unit to adjust a charging voltage outputted to the charging management unit.

In the apparatus for efficient charging of electronic cigarettes of the present invention, the adjustable voltage output unit includes a first DC-DC output circuit and a voltage regulation output circuit;
an input port of the first DC-DC output circuit is connected to an output port of the electronic cigarette case battery unit, a first input port of the voltage regulation output circuit is connected to an output port of the first DC-DC output circuit, a second input port of the voltage regulation output circuit is connected to an output port of the micro-control unit, an output port of the voltage regulation output circuit is connected to an input port of the charging management unit;
the voltage regulation control signal is a duty radio adjustable PWM signal;
the first DC-DC output circuit is configured to convert a power signal provided by the electronic cigarette case battery unit to a fixed DC voltage and output the fixed DC voltage, and the voltage regulation output circuit is configured to adjust the fixed DC voltage according to the duty radio adjustable PWM signal and generate the charging voltage that is adjusted.

In the apparatus for efficient charging of electronic cigarettes, the fixed DC voltage is 5V.

In the apparatus for efficient charging of electronic cigarettes of the present invention, the voltage regulation output circuit includes a MOS transistor and a capacitor, a drain of the MOS transistor is connected to the charging management unit, a source of the MOS transistor is connected to the first DC-DC output circuit, a gate of the MOS transistor is connected to the microcontroller, one end of the capacitor is connected to the drain of the MOS transistor, and the other end of the capacitor is grounded; and

the MOS transistor is configured to receive the fixed DC voltage via the source thereof and receive the duty radio adjustable PWM signal via the gate thereof, and thereby control the conduction and cut-off of the MOS transistor, and hence further control the charging voltage.

In the apparatus for efficient charging of electronic cigarettes of the present invention, the MOS transistor is a P-type MOS transistor.

In the apparatus for efficient charging of electronic cigarettes of the present invention, a type of the MOS transistor is AO3401.

In the apparatus for efficient charging of electronic cigarettes of the present invention, the micro-control unit includes a microcontroller and a first resistor; a type of the microcontroller is SN8P2711B; a PWM1 pin of the microcontroller is connected to one end of the first resistor and the gate of the MOS transistor respectively, and the PWM1 pin of the microcontroller outputs the duty radio adjustable PWM signal; the other end of the first resistor is connected to the source of the MOS transistor, a VSS pin of the microcontroller is grounded, and a VDD pin of the microcontroller is connected to a power signal.

In the apparatus for efficient charging of electronic cigarettes of the present invention, the current sampling unit includes a sampling resistor, one end of the sampling resistance is grounded, and the other end is connected to the charging management unit and a P4.4 pin of the microcontroller respectively.

In the apparatus for efficient charging of electronic cigarettes of the present invention, a resistance of the sampling resistor is 1-2Ω.

In the apparatus for efficient charging of electronic cigarettes of the present invention, the adjustable voltage output unit includes a second DC-DC output circuit and a digital potentiometer,
a first input port of the second DC-DC output circuit is connected to an output port of the electronic cigarette case battery unit, a second input port of the second DC-DC output circuit is connected to an output port of the digital potentiometer, an output port of the second DC-DC output circuit is connected to an input port of the charging management unit, and an input port of the digital potentiometer is connected to an output port of the micro-control unit;
the voltage regulation control signal is a voltage regulation digital control signal;
the digital potentiometer is configured to adjust a resistance of an output sampling feedback resistor of the second DC-DC output circuit according to the voltage regulation digital control signal, and to make the second DC-DC output circuit output the charging voltage that is real-timely adjusted.

A method for efficient charging of electronic cigarettes is also provided; the method comprises the following steps:
S1, a current sampling circuit samples actual charging current of a charging management unit;
S2, a micro-control unit determines whether a difference between preset constant charging current and the actual charging current is within a preset range;
S3, if the difference is within the preset range, executing the step S1; if the difference is out of the preset range, the micro-control unit outputs a voltage regulation control signal;
S4, an adjustable voltage output unit adjusts a charging voltage output to the charging management unit according to the voltage regulation control signal, and then executing the step S 1.

In the method for efficient charging of electronic cigarette of the present invention, in the step S3, the voltage regulation control signal is a duty radio adjustable PWM signal.

In the method for efficient charging of electronic cigarette of the present invention, in the step S3, the voltage regulation control signal is a voltage regulation digital control signal.

In the method for efficient charging of electronic cigarette of the present invention, the step S4 specifically includes:
S41, a first DC-DC output circuit converts a power signal provided by an electronic cigarette case battery unit to a fixed DC voltage and outputs the fixed DC voltage;
S42, a voltage regulation output circuit regulates the fixed DC voltage according to the duty radio adjustable PWM signal and generates the charging voltage that is adjusted.

In the method for efficient charging of electronic cigarette of the present invention, the step S4 specifically includes:
S41', a digital potentiometer receives the voltage regulation digital control signal and adjusts a resistance of a sampling feedback resistor of a second DC-DC output circuit;
S42', the second DC-DC output circuit outputs the charging voltage that is real-timely adjusted to the charging management unit.

When implementing the apparatus and method for efficient charging of electronic cigarettes, the following advantageous effects can be achieved: the micro-control unit determines whether the difference between the preset constant charging current and the actual charging current is within the preset range, controls the transmission of the voltage regulation control signal, and further controls the adjustable voltage output unit to adjust the charging voltage outputted to the charging management unit, so that the actual charging current is equal to or slightly less than the battery constant charging current. By reducing the difference between the charging voltage and the voltage of the electronic cigarette battery unit, the charging efficiency is improved.

### BRIEF DESCRIPTION OF THE DRAWINGS

The present invention will be further described with reference to the accompanying drawings and embodiments in the following, in the accompanying drawings:
Fig. 1 illustrates a schematic view of charging a battery rod using an electronic cigarette case in the prior art;
Fig. 2 illustrates a schematic view of an apparatus for efficient charging of electronic cigarettes of the present invention;
Fig. 3 illustrates a schematic view of an apparatus for efficient charging of electronic cigarettes according to a first embodiment of the present invention;
Fig. 4 illustrates a circuit diagram of the apparatus for efficient charging of electronic cigarettes according to the first embodiment of the present invention;
Fig. 5 illustrates a schematic view of an apparatus for efficient charging of electronic cigarettes according to a second embodiment of the present invention;
Fig. 6 is a flow chart of a method for efficient charging of electronic cigarettes, according to the present invention;
Fig. 7 illustrates a flow chart of a method for efficient charging of electronic cigarettes, according to a first embodiment of the present invention;
Fig. 8 is a flow chart of a method for efficient charging of electronic cigarettes, according to a second embodiment of the present invention.

### DETAILED DESCRIPTION OF THE PREFERRED EMBODIMENT

In order to make the technical feature, the propose and the technical effect of the present invention more clear, the present invention will now be described in detail with reference to the accompanying drawings and embodiments.

Electronic cigarette battery rods with linear charging managements integrated therein have a feature: when an external charging voltage of a battery rod gets close to a voltage of a battery in the battery rod from high to low, an internal charging control circuit (i.e. the charging management unit 210 of the present invention) will reduce a voltage drop between an input (i.e. the charging voltage of the present invention) and an output (i.e. the battery voltage of the electronic cigarette battery unit of the present invention) as more as possible, so that charging current is kept being constant. At this moment, the actual charging current is slightly less than the constant charging current, and a voltage difference between the external charging voltage and the internal battery voltage reaches to the minimum thereof, which is approximately 0.2V. In order to ensure a high charging efficiency, constant charging current should be firstly ensured. The actual charging current is relevant to a voltage difference between the battery voltage and the charging voltage, and the smaller the voltage difference is, the higher the efficiency is achieved. Therefore, the present invention adjusts the voltage drop between the input and the output in real time, and makes the actual charging current be slightly less than or equal to the battery constant charging current, thus the charge efficiency is improved.

As shown in Fig. 2, it is a schematic view of an apparatus for efficient charging of electronic cigarettes in the present invention.

The apparatus for efficient charging of electronic cigarettes of the present invention comprises an electronic cigarette case 100 and a battery rod 200.

The battery rod 200 includes a charging management unit 210 and an electronic cigarette battery unit 220. The charging management unit 210 is configured to control the battery rod 200 to be charged by a preset constant charging current.

The electronic cigarette case 100 includes an electronic cigarette case battery unit 110, a current sampling unit 130, a micro-control unit 140, and an adjustable voltage output unit 120.

The adjustable voltage output unit 120 is connected to the electronic cigarette battery unit 110, the micro-control unit 140 and the charging management unit 210 respectively, and the current sampling unit 130 is connected to the charging management unit 210 and the micro-control unit 140 respectively.

The current sampling unit 130 is configured to sample actual charging current of the charging management unit 210, and the micro-control unit 140 is configured to determine whether a difference between preset constant charging current and the actual charging current is within a preset range, and is further configured to control the transmission of a voltage regulation control signal, thereby controlling the adjustable voltage output unit 120 to adjust a charging voltage outputted to the charging management unit 210, so that the actual charging current is equal to or slightly less than the constant charging current. By reducing the charging voltage difference between the charging voltage and the voltage of the electronic cigarette battery unit 220, the charging efficiency is improved.

The preset range is (0-50%)*the battery constant charging current. Preferably, the preset range is (0-10%)*the battery constant charging current according to a first embodiment.

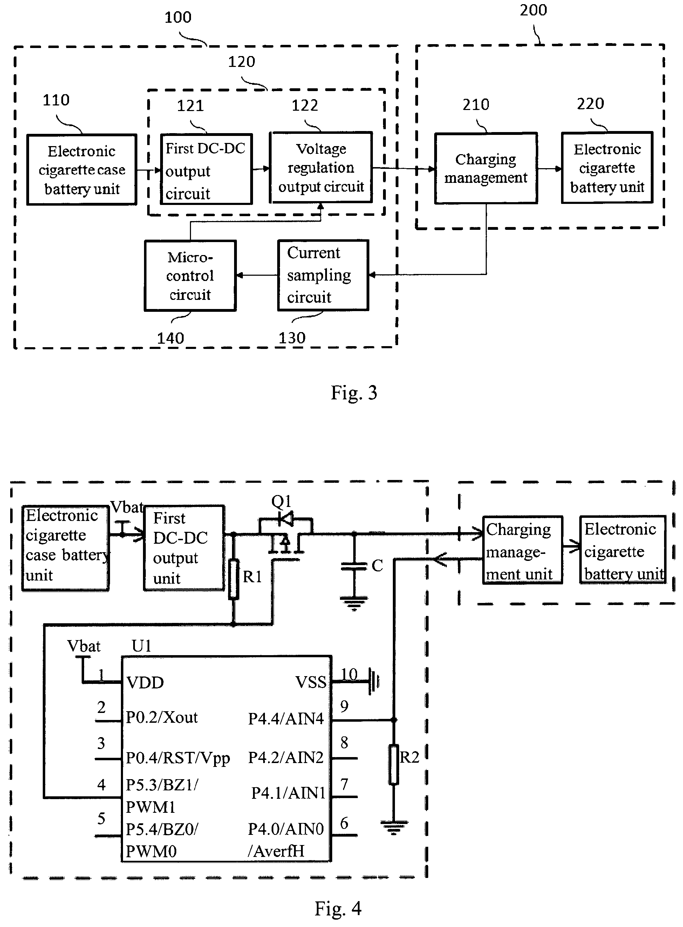

Specifically, if the difference between the constant charging current and the actual charging current is out of the preset range (generally, the actual charging current is less than or equal to the constant charging current), the adjustable voltage output unit 120 is controlled to improve the charging voltage. As shown in Fig. 3, it is a schematic view of an apparatus for efficient charging of electronic cigarettes according to a first embodiment of the present invention. In the first embodiment, the apparatus for efficient charging of electronic cigarettes comprises an electronic cigarette case 100 and a battery rod 200.

The battery rod 200 includes a charging management unit 210 and an electronic cigarette battery unit 220.

The electronic cigarette case 100 includes an electronic cigarette case battery unit 110, a current sampling unit 130, a micro-control unit 140 and an adjustable voltage output unit 120; wherein, the adjustable voltage output unit 120 includes a first DC-DC output circuit 121 and a voltage regulation output circuit 122.

An input port of the first DC-DC output circuit 121 is connected to an output port of the electronic cigarette case battery unit 110, an output port of the first DC-DC output circuit 121 is connected to a first input port of the voltage regulation output circuit 122, an output port of the voltage regulation output circuit 122 is connected to an input port of the charging management unit 210, a first output port of the charging management unit 210 is connected to an input port of the current sampling unit 130, a second output port of the charging management unit 210 is connected to an input port of the electronic cigarette battery unit 220, an output port of the current sampling unit 130 is connected to an input port of the micro-control unit 140, and an output port of the micro-control unit 140 in connected to a second input port of the voltage regulation output circuit 120.

The electronic cigarette case battery unit 110 provides a charging power signal for the first DC-DC output circuit 121, and the first DC-DC output circuit 110 converts the charging power signal to a fixed DC voltage. The current sampling unit 130 is configured to sample actual charging current of the charging management unit 210. The micro-control unit 140 is configured to determine whether a difference between preset constant charging current and the actual charging current is within a preset range, and is configured to control the transmission of a voltage regulation control signal. The voltage regulation output circuit 122 adjusts the fixed DC voltage real-timely according to the a voltage regulation control signal, and outputs the adjusted charging voltage to the charging management unit 210, so that the actual charging current is equal to or slightly less than the constant battery charging current. By reducing the charging voltage difference between the charging voltage and the voltage of the electronic cigarette battery unit 220, the charging efficiency is improved. Specifically, in the first embodiment, the voltage regulation control signal is a duty radio adjustable PWM signal.

In the present embodiment, the fixed DC voltage is 5V.

As shown in Fig. 4, it is a circuit diagram of the apparatus for efficient charging of electronic cigarettes, according to the first embodiment of the present invention.

The voltage regulation output circuit 122 includes a MOS transistor Q1, and a capacitor C. The MOS transistor is a P-type MOS transistor, and a type of the MOS transistor is AO3401. The micro-control unit 140 includes a microcontroller U1 and a first resistor R1, and a type of the microcontroller U1 is SN8P2711B.

The current sampling unit 130 includes a sampling resistor R2. The resistance of the sampling resistor R2 is small, and is generally 1-2Ω. Preferably, in the present embodiment, the resistance is 1Ω.

A drain of the MOS transistor Q1 is connected to the charging management unit 210, a source of the MOS transistor Q1 is connected to the first DC-DC output circuit 121, and a gate of the MOS transistor Q1 is connected to a PWM1 pin of the microcontroller U1. One end of the capacitor C is connected to the drain of the MOS transistor Q1, and the other end of the capacitor C is grounded. A PWM1 pin of the microcontroller U1 is connected to one end of the first resistor R1. The PWM1 pin of the microcontroller U1 outputs the duty radio adjustable PWM signal. The other end of the first resistor R1 is connected to the source of the MOS transistor Q1. A VSS pin of the microcontroller U1 is grounded, and a VDD pin of the microcontroller U1 is connected to a power signal Vbat.

One end of the sampling resistor R2 is grounded, and the other end of the sampling resistor R2 is connected to the charging management unit 210 and a P4.4 pin of the microcontroller U1 respectively.

The MOS transistor Q1 is configured to receive the fixed DC voltage via the source thereof and receive the duty radio adjustable PWM signal via the gate thereof, and thereby control the conduction and cut-off of the MOS transistor Q1. According to the sampled actual charging current, the microcontroller U1 calculates the corresponding duty radio thereof, generates the duty radio adjustable PWM signal, and controls the actual charging current for charging the battery to be just less than the constant battery charging current. When the MOS transistor Q1 is conducted, the fixed DC voltage charges the capacitor C. When the MOS transistor is cut-off, the capacitor C discharges the energy accumulated in the charging process, and outputs the charging voltage.

Specifically, if the difference between the constant battery charging current and the actual charging current is out of the preset range (generally, the actual charging current is less than or equal to the constant charging current), the microcontroller U1 controls to increase the duty radio of the duty radio adjustable PWM signal, and further controls the voltage regulation output circuit 122 to increase the charging voltage. For example, if the constant charging current is 100mA, in the first embodiment, the preset range preferred is (0-10%)*the constant charging current, that is, 0-10mA.

If the actual charging current sampled by the sampling unit is 60mA, the actual charging current is less than the constant battery charging current, and the difference between the actual charging current and the constant battery charging current is out of the preset range. On this occasion, the actual charging current should be increased apparently, and the charging voltage should be boosted correspondingly. Therefore, in order to control to output 90mA of the actual charging current, the microcontroller U1 should control to boost the charging voltage correspondingly, for example, boost the charging voltage to be 150% of the origin. This can be achieved by increasing the duty radio of the duty radio adjustable PWM signal outputted to the MOS transistor Q1. For example, if the original duty radio is 60%, in order to boost the charging voltage, the duty radio is calculated and should be increased to 90%, and the microcontroller U1 outputs the duty radio adjustable PWM signal with the 90% duty radio to the gate of the MOS transistor Q1, and thus controls the conduction time of the MOS transistor Q1 to be extended. Only when the MOS transistor Q1 is conducted, the capacitor C is charged. Therefore, the energy accumulated in the charging process increases, so that the charging voltage output during the discharging process of the capacitor C is boosted to the expected 150% of the origin.

In general, a voltage of the charge power source signal of the battery of the electronic cigarette case battery unit 110 is 3-4.2V, and a voltage of the power source signal of the battery of the electronic cigarette battery unit 220 is also 3-4.2V. Preferably, in the present embodiment, a voltage of the power source signal of the battery is 3.7V.

Regarding the calculation of the efficiency, in the present embodiment, the efficiency of DC-DC is 85%. When the external charging voltage of the battery rod gets close to the internal charging voltage of the battery from high to low, the voltage difference between the external charging voltage and the internal charging voltage reaches to the minimum, which is approximately 0.2V. Therefore, in the present embodiment, the charging voltage is (3.7+0.2) V, that is, 3.9V. When the electronic cigarette case charges the battery rod, the charging efficiency is 85%*(3.7/3.9). In the prior art, the charging efficiency of constant voltage charging is 85%* (3.7/5). It is obvious that the charging efficiency of the present application is greatly improved.

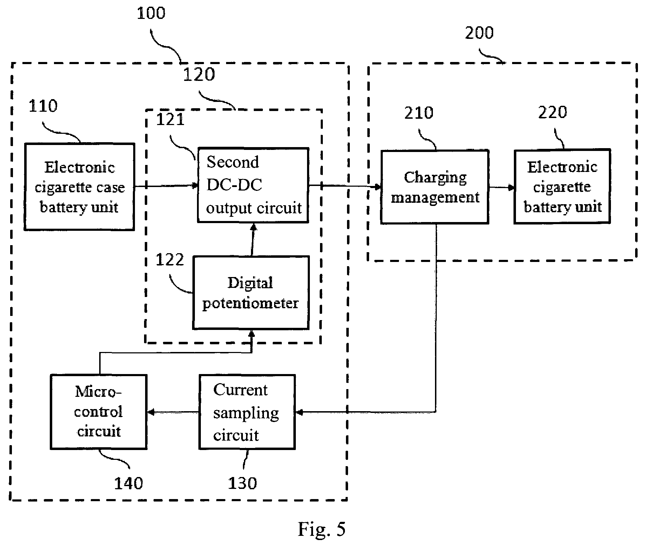

As shown in Fig. 5, it is a schematic view of an apparatus for efficient charging of electronic cigarettes according to a second embodiment of the present invention.

According to the second embodiment of the present invention, the apparatus for efficient charging of electronic cigarettes comprises an electronic cigarette case 100 and a battery rod 200.

The battery rod 200 includes a charging management unit 210 and an electronic cigarette battery unit 220.

The electronic cigarette case 100 includes an electronic cigarette case battery unit 110, a current sampling unit 130, a micro-control unit 140 and an adjustable voltage output unit 120. The adjustable voltage output unit 120 includes a second DC-DC output circuit 121 and a digital potentiometer 122.

A first input port of the second DC-DC output circuit 121 is connected to an output port of the electronic cigarette case battery unit 110, an output port of the second DC-DC output circuit 121 is connected to an input port of the charging management unit 210, a first output port of the charging management unit 210 is connected to an input port of the current sampling unit 130, a second output port of the charging management unit 210 is connected to an input port of the electronic cigarette battery unit 220, an output port of the current sampling unit 130 is connected to an input port of the micro-control unit 140, an output port of the micro-control unit 140 is connected to an input port of the digital potentiometer 122, and an output port of the digital potentiometer 122 is connected to a second input port of the second DC-DC output circuit 121.

The electronic cigarette battery unit 110 provides a charging power signal to the second DC-DC output circuit 121, and the current sampling unit 130 is configured to sample actual charging current of the charging management unit 210. The micro-control unit 140 is configured to determine whether a difference between preset constant charging current and the actual charging current is within a preset range, and is configured to control to the transmission of a voltage regulation control signal. The digital potentiometer 122 adjusts the resistance of an output sampling feedback resistor (not shown in the figures) of the second DC-DC output circuit 121 according to the voltage regulation control signal, and thus ensures that the second DC-DC output circuit 121 outputs the charging voltage that is real-timely adjusted to the charging management unit 210 (the technical means that using the digital potentiometer to adjust the DC-DC output sampling feedback resistor belongs to the prior art, and therefore is not described in detail here). Therefore, the actual charging current is equal to or slightly less than the constant charging current. By reducing the charging voltage difference between the charging voltage and the voltage of the electronic cigarette battery rod unit 220, the charge efficiency is increased. Specifically, in the second embodiment, the voltage regulation control signal is a voltage regulation digital control signal.

Specifically, if the difference between the constant charging current and the actual charging current is out of the preset range (generally, the actual charging current is less than or equal to the constant charging current), the microcontroller U1 transmits the voltage regulation digital control signal, the digital potentiometer 122 adjusts the resistance of the output sampling feedback resistor of the second DC-DC output circuit 121 according to the voltage regulation digital control signal, and further makes the second DC-DC output circuit 121 output the boosted charging voltage.

Preferably, in the second embodiment, the preset range is (0-10%)*the constant charging current.

For example, if the battery constant charging current is 100mA, the preset range is (0-10%)*the constant battery charging current, that is, 0-10mA.

If the actual charging current sampled by the sampling unit is 60mA, the difference between the constant battery charging current and the actual charging current is out of the preset range. On this occasion, the actual charging current may be increased to 90mA. Therefore, in order to control to output 90mA of the actual charging current, the microcontroller U1 should boost the charging voltage correspondingly, for example, boost the charging voltage to be 150% of the origin. The microcontroller U1 transmits a voltage regulation digital control signal to the digital potentiometer 122, the digital potentiometer 122 adjusts the resistance of the output sampling feedback resistor (not shown in the figures) of the second DC-DC output circuit 121 which is connected to the DC-DC conversion chip according to the voltage regulation digital control signal, and further adjusts the output voltage of the second DC-DC output circuit 121, that is, outputs the charging voltage that is real-timely adjusted, and makes it reach the expected 150% of origin.

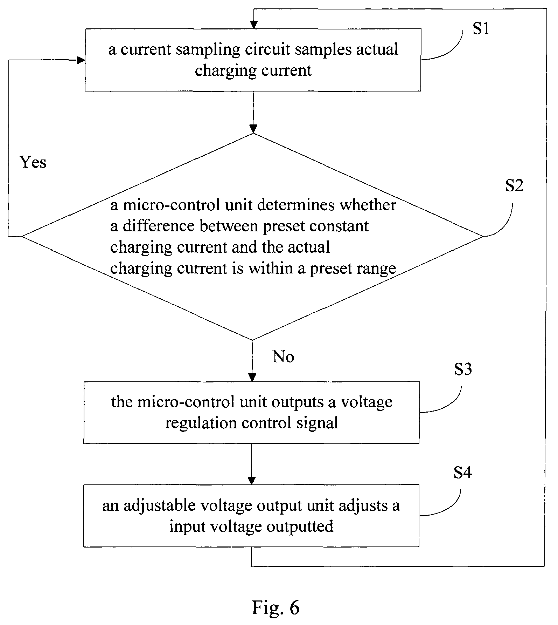

As shown in Fig. 6, it is a flow chart of a method for efficient charging of electronic cigarettes according to the present invention.

The method of the present invention includes the following steps:
S1, a current sampling circuit 130 samples actual charging current of a charging management unit 210;
S2, a micro-control unit 140 determines whether a difference between preset constant charging current and the actual charging current is within a preset range;
S3, if the difference is within the preset range, executing the step S1; if the difference is out of the preset range, the micro-control unit 140 outputs a voltage regulation control signal;
S4, an adjustable voltage output unit 120 adjusts a charging voltage outputted to the charging management unit 210 according to the voltage regulation control signal, and executing the step S 1.

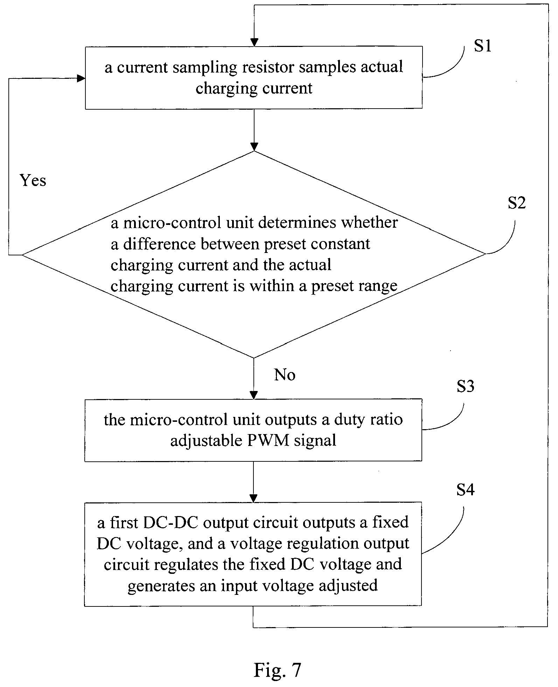

As shown in Fig. 7, it is a flow chart of a method for efficient charging of electronic cigarettes according to a first embodiment of the present invention.

The first embodiment includes the following steps:
S1, a sampling resistor R2 of a current sampling circuit 130 samples actual charging current of a charging management unit 210;
S2, a micro-control unit 140 determines whether a difference between preset constant charging current and the actual charging current is within a preset range;
wherein, in the present embodiment, the preset range is (0-10%)*the constant charging current;
S3, if the difference is within the preset range, executing the step S1; otherwise, the microcontroller U1 outputs a duty radio adjustable PWM signal;
S4, an adjustable voltage output unit 120 adjusts a charging voltage outputted to the charging management unit 210 according to the duty radio adjustable PWM signal to ensure that the actual charging current is equal to or slightly less than the constant charging current, and then returning to the step S 1.

Specifically, S4 includes the following steps:
S41, a first DC-DC output circuit converts a power signal provided by an electronic cigarette case battery unit to a fixed DC voltage and outputs the fixed DC voltage, wherein, in the present embodiment, the fixed DC voltage is 5V;
S42, a voltage regulation output circuit regulates the fixed DC voltage according to the duty radio adjustable PWM signal and generates the charging voltage that is adjusted.

Specifically, a source of a MOS transistor Q1 of the voltage regulation output circuit receives the stable DC voltage of the first DC-DC output circuit, and a gate of the MOS transistor Q1 receives the duty radio adjustable PWM signal, thus controls the conduction and cut-off of the MOS transistor Q1, and further controls the fixed DC voltage charges a capacitor C. The capacitor C provides the energy accumulated in the charging process by means of discharging and outputting the charging voltage to the charging management unit 210.

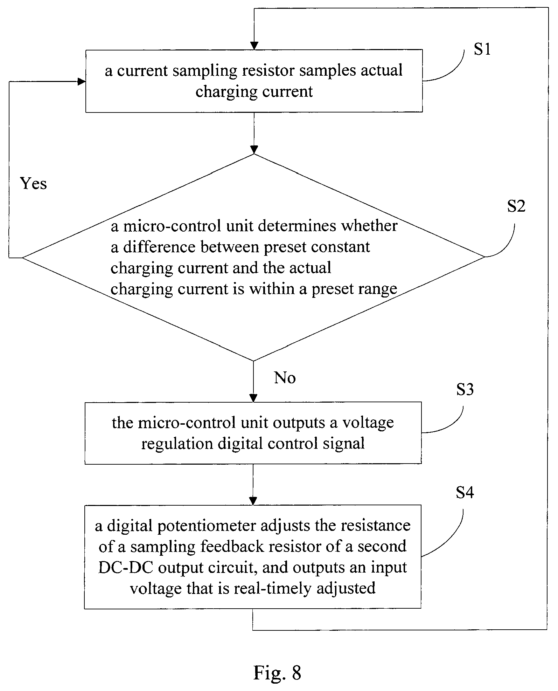

As shown in Fig. 8, it is a flow chart of a method for efficient charging of electronic cigarettes efficient charging, according to a second embodiment of the present invention.

The second embodiment includes the following steps:
S1, a sampling resistor R2 of a current sampling circuit 130 samples actual charging current of a charging management unit 210;
S2, a micro-control unit 140 determines whether a difference between preset constant charging current and the actual charging current is within a preset range;
wherein, in the present embodiment, the preset range is (0-10%)*the constant battery charging current;
S3, if the difference is within the preset range, executing the step S1; otherwise, the microcontroller U1 outputs a voltage regulation digital control signal;
S4, an adjustable voltage output unit 120 adjusts a charging voltage outputted to the charging management unit 210 according to the voltage regulation digital control signal to ensure that the actual charging current is equal to or slightly less than the constant charging current, and then executing the step S 1.

Specifically, S4 includes the following steps:
S41', a digital potentiometer receives the voltage regulation digital control signal, and adjusts a resistance of a sampling feedback resistor of a second DC-DC output circuit;
S42', the second DC-DC output circuit outputs the charging voltage that is real-timely adjusted to the charging management unit.

Those mentioned above are the detailed descriptions of the embodiments accompanying the drawings. However, the present invention is not limited to the embodiments above. The embodiments herein are just for the illustration, and do not imply a limitation to the present invention. In the inspiration of the present invention, those with ordinary skills in the art can also make many modifications without breaking away from the subject of the present invention and the protection scope of the claims. All these modifications belong to the protection of the present invention.

## Claims

1. An apparatus for efficient charging of electronic cigarettes, comprising an electronic cigarette case and a battery rod; the battery rod including a charging management unit and an electronic cigarette battery unit, and the electronic cigarette case including an electronic cigarette case battery unit; wherein, the electronic cigarette case further includes a current sampling unit, a micro-control unit, and an adjustable voltage output unit;
the adjustable voltage output unit is connected to the electronic cigarette case battery unit, the micro-control unit, and the charging management unit respectively, and the current sampling unit is connected to the charging management unit and the micro-control unit respectively;
the current sampling unit is configured to sample actual charging current of the charging management unit; and the micro-control unit is configured to determine whether a difference between preset constant charging current and the actual charging current is within a preset range, and is further configured to control transmission of a voltage regulation control signal and thereby control the adjustable voltage output unit to adjust a charging voltage outputted to the charging management unit.

2. The apparatus for efficient charging of electronic cigarettes according to claim 1, wherein, the adjustable voltage output unit includes a first DC-DC output circuit and a voltage regulation output circuit;
an input port of the first DC-DC output circuit is connected to an output port of the electronic cigarette case battery unit, a first input port of the voltage regulation output circuit is connected to an output port of the first DC-DC output circuit, a second input port of the voltage regulation output circuit is connected to an output port of the micro-control unit, an output port of the voltage regulation output circuit is connected to an input port of the charging management unit;
the voltage regulation control signal is a duty radio adjustable PWM signal; the first DC-DC output circuit is configured to convert a power signal provided by the electronic cigarette case battery unit to a fixed DC voltage and output the fixed DC voltage, and the voltage regulation output circuit is configured to adjust the fixed DC voltage according to the duty radio adjustable PWM signal and generate the charging voltage that is adjusted.

3. The apparatus for efficient charging of electronic cigarettes according to claim 2, wherein, the fixed DC voltage is 5V.

4. The apparatus for efficient charging of electronic cigarettes according to claim 2, wherein, the voltage regulation output circuit includes a MOS transistor and a capacitor, a drain of the MOS transistor is connected to the charging management unit, a source of the MOS transistor is connected to the first DC-DC output circuit, a gate of the MOS transistor is connected to the microcontroller, one end of the capacitor is connected to the drain of the MOS transistor, and the other end of the capacitor is grounded; and
the MOS transistor is configured to receive the fixed DC voltage via the source thereof and receive the duty radio adjustable PWM signal via the gate thereof, and thereby control the conduction and cut-off of the MOS transistor, and hence further control the charging voltage.

5. The apparatus for efficient charging of electronic cigarettes according to claim 4, wherein, the MOS transistor is a P-type MOS transistor.

6. The apparatus for efficient charging of electronic cigarettes according to claim 5, wherein, a type of the MOS transistor is AO3401.

7. The apparatus for efficient charging of electronic cigarettes according to claim 4, wherein, the micro-control unit includes a microcontroller and a first resistor; a type of the microcontroller is SN8P2711B; a PWM1 pin of the microcontroller is connected to one end of the first resistor and the gate of the MOS transistor respectively, and the PWM1 pin of the microcontroller outputs the duty radio adjustable PWM signal; the other end of the first resistor is connected to the source of the MOS transistor, a VSS pin of the microcontroller is grounded, and a VDD pin of the microcontroller is connected to a power signal.

8. The apparatus for efficient charging of electronic cigarettes according to claim 7, wherein, the current sampling unit includes a sampling resistor, one end of the sampling resistance is grounded, and the other end is connected to the charging management unit and a P4.4 pin of the microcontroller respectively.

9. The apparatus for efficient charging of electronic cigarettes according to claim 8, wherein, a resistance of the sampling resistor is 1-2Ω.

10. The apparatus for efficient charging of electronic cigarettes according to claim 1, wherein, the adjustable voltage output unit includes a second DC-DC output circuit and a digital potentiometer,
a first input port of the second DC-DC output circuit is connected to an output port of the electronic cigarette case battery unit, a second input port of the second DC-DC output circuit is connected to an output port of the digital potentiometer, an output port of the second DC-DC output circuit is connected to an input port of the charging management unit, and an input port of the digital potentiometer is connected to an output port of the micro-control unit;
the voltage regulation control signal is a voltage regulation digital control signal;
the digital potentiometer is configured to adjust a resistance of an output sampling feedback resistor of the second DC-DC output circuit according to the voltage regulation digital control signal, and hence to ensure that the charging voltage outputted by the second DC-DC output circuit is real-timely adjusted.

11. A method for efficient charging of electronic cigarettes, wherein, the method comprises the following steps:
S1, a current sampling circuit samples actual charging current of a charging management unit;
S2, a micro-control unit determines whether a difference between preset constant charging current and the actual charging current is within a preset range;
S3, if the difference is within the preset range, executing the step S1; if the difference is out of the preset range, the micro-control unit outputs a voltage regulation control signal;
S4, an adjustable voltage output unit adjusts a charging voltage outputted to the charging management unit according to the voltage regulation control signal, and then executing the step S1.

12. The method for efficient charging of electronic cigarette according to claim 11, wherein, in the step S3, the voltage regulation control signal is a duty radio adjustable PWM signal.

13. The method for efficient charging of electronic cigarette according to claim 11, wherein, in the step S3, the voltage regulation control signal is a voltage regulation digital control signal.

14. The method for efficient charging of electronic cigarette according to claim 12, wherein, the step S4 specifically includes:
S41, a first DC-DC output circuit converts a power signal provided by an electronic cigarette case battery unit to a fixed DC voltage and outputs the fixed DC voltage;
S42, a voltage regulation output circuit regulates the fixed DC voltage according to the duty radio adjustable PWM signal and generates the charging voltage that is adjusted.

15. The method for efficient charging of electronic cigarette according to claim 13, wherein, the step S4 specifically includes:
S41', a digital potentiometer receives the voltage regulation digital control signal and adjusts a resistance of a sampling feedback resistor of a second DC-DC output circuit;
S42', the second DC-DC output circuit outputs the charging voltage that is real-timely adjusted to the charging management unit.
